# FASCICULE DE BREVET EUROPEEN

(11) **EP 1 534 166 B1**
(45) Date de publication et mention de la délivrance du brevet: **07.04.2010**
(21) Numéro de dépôt: 03755577.8
(22) Date de dépôt: 18.06.2003
(51) Int. Cl.: A61C 3/16

(54) **INSTRUMENTATION POUR L'EXTRACTION D'ELEMENTS PROTHETIQUES A TENON RADICULAIRE OU D'IMPLANTS**
AUSRÜSTUNG ZUR EXTRAKTION VON PROTHETISCHEN WURZELPFOSTEN-ELEMENTEN ODER IMPLANTATEN
EQUIPMENT FOR EXTRACTING ROOT POST PROSTHETIC ELEMENTS OR IMPLANTS

(30) Priorité: 02.07.2002 FR 0208258
(43) Date de publication de la demande: 01.06.2005
(73) Titulaire: WAM (Société Unipersonnelle à Responsabilité Limitée), 13014 Marseille (FR)
(72) Inventeur: MULLER, Alexandre, F-13100 Aix en Provence (FR); MULLER, William, F-13090 Aix en Provence (FR)
(74) Mandataire: Hirsch & Associés
(86) Numéro de dépôt international: PCT/FR2003/001862
(87) Numéro de publication internationale: WO 2004/004588

(56) Documents cités:
- FR-A- 1 064 933
- FR-A- 2 649 004

## Description

La présente invention concerne une instrumentation pour l'extraction d'éléments prothétiques à tenon radiculaire ou d'implants. Elle se propose de permettre l'exécution de cette intervention dans des conditions de sécurité et de rapidité inconnues à ce jour, au moyen d'une instrumentation simple, de fabrication et d'emploi faciles.

La dépose des éléments prothétiques dentaires à tenon métallique est en effet une opération délicate, redoutée des praticiens chirurgiens-dentistes, en raison de son caractère hasardeux et dangereux pour l'intégrité de la racine porteuse du tenon si l'on considère qu'un effort d'arrachage mal contrôlé appliqué à un tenon scellé dans ladite racine, peut entraîner une fracture plus ou moins importante de celle-ci.

Différents instruments ont déjà été proposés pour effectuer la dépose des éléments prothétiques dentaires à tenon métallique.

Par exemple, dans le document FR-2 559 053, est décrit un dispositif pour extraire le pivot d'une dent, comprenant une pince dont les deux branches sont reliées à des mors destinés à serrer la tête du pivot à extraire, une came pivotante, un levier monté sur un axe de pivotement solidaire d'au moins l'une des deux branches, un organe d'appui pour prendre appui sur la racine de la dent, cet organe étant relié de façon libre aux branches ou à la came et comporte une contre-came coopérant avec la came, la rotation de la came par pivotement commandé manuellement provoquant le déplacement de l'ensemble formé par les deux branches et les mors ainsi que du pivot par rapport à la racine.

Ce dispositif a pour inconvénient de nécessiter un positionnement occlusal, lors de son utilisation, entraînant un manque de visibilité et de présenter un volume excessif lorsqu'on souhaite intervenir au niveau des dents postérieures. De plus, son maniement incommode requiert, semble-t-il, l'usage des deux mains.

Dans le document FR-2 649 004, est décrit un dispositif pour extraire des prothèses dentaires, des couronnes ou analogues, comprenant deux leviers, chacun ayant une poignée et une mâchoire, lesdits leviers étant reliés, de façon pivotante, de sorte que lesdites mâchoires sont écartées en rapprochant mutuellement les poignées, un corps étant articulé à l'une desdites mâchoires, ledit corps étant guidé dans un siège prévu sur l'autre mâchoire et supportant deux éléments opposés en forme de crochet pouvant pivoter dans un plan perpendiculaire au plan des leviers, ladite autre mâchoire présentant des butées adaptées pour reposer sur une zone de la bouche adjacente d'une prothèse à extraire, lesdits éléments en forme de crochet étant adaptés pour engager un bord de ladite prothèse quand lesdites mâchoires sont déplacées l'une vers l'autre, et pour exercer une force d'extraction contre la réaction d'appui des butées sur la zone de la bouche quand les mâchoires sont écartées, lesdits éléments en forme de crochet présentant deux prolongements entre lesquels est disposé un ressort de rappel, ledit ressort étant reçu dans un trou traversant ledit corps.

Comme le précédent, l'utilisation de ce dispositif nécessite son positionnement occlusal. D'autre part, lors de son utilisation, l'une des mâchoires de la pince doit prendre appui sur les dents adjacentes, de sorte qu'il n'est pas utilisable en cas d'absence de dents adjacentes. En outre, le dispositif décrit est assez complexe.

Dans le document FR-1 064 933, est décrite une pince pour l'arrachement des pivots des dents à pivot fracturés au ras de la racine ou que l'on a préalablement réduits au ras de la racine et sur l'extrémité accessible desquels on fixe, par vissage, une tête constituée par une petite filière. Cette pince comprend deux branches articulées autour d'un axe mais non croisées, ces branches étant terminées, à leur partie antérieure, sous forme de fourches formées d'une seule pièce avec ladite partie antérieure des branches. Ces fourches peuvent être droites ou recourbées de manière à permettre d'atteindre les dents les plus éloignées.

En rapprochant les branches de la pince, on écarte les fourches respectives interposées entre la racine et la tête rapportée et on arrive à exercer ainsi un effort suffisant pour arracher l'ensemble de la tête rapportée-pivot sans pour cela soumettre la dent elle-même à un effort d'arrachement.

Un inconvénient de cette pince entièrement rigide résulte du fait que lors de l'écartement des fourches constituant l'extrémité de celle-ci, lesdites fourches effectuent une trajectoire courbe de sorte que l'effort d'extraction appliqué au tenon que l'on veut extraire ne s'exerce par rigoureusement axialement comme cela est souhaitable, mais avec une forte composante latérale faisant encourir des risques de fissure ou de fracture de la racine si celle-ci est fragile. En outre, la conformation et la rigidité de la partie antérieure travaillante de la pince ne permettent pas d'atteindre commodément toutes les dents.

Un autre inconvénient important de cette pince réside dans le fait que lorsque le tenon se sépare du matériau de scellement, en raison de l'importante force d'extraction nécessaire à son arrachement, il peut se trouver brutalement projeté à l'extérieur avec des risques de blessure du patient ou du praticien.

La présente invention a notamment pour but de remédier aux inconvénients des dispositifs connus d'extraction de tenons dentaires et, notamment, à ceux du genre de celui qui est décrit dans le documents FR- 1 064 933.

Pour cela, l'instrumentation selon l'invention comprend essentiellement un instrument comportant deux leviers reliés l'un à l'autre, dans leur portion intermédiaire, de façon pivotante et non croisée, au moyen d'une articulation, chacun desdits leviers comprenant ainsi une poignée et une branche d'extraction s'étendant de part et d'autre de ladite articulation, de sorte que le rapprochement des deux poignées entraîne l'écartement des deux branches d'extraction, cet instrument étant notamment remarquable en ce que les extrémités des branches d'extraction sont recourbées de sorte à former un angle avec la partie restante desdites branches d'extraction, et en ce qu'il comporte des embouts d'extraction en forme d'étriers et agencés pour pouvoir être positionné de manière amovible et avec une aptitude de pivotement, aux extrémités recourbées des branches d'extraction.

Grâce à cette disposition caractéristique, lorsqu'on écarte les branches d'extraction en rapprochant les poignées, après avoir introduit les étriers d'extraction rapprochés dans l'espace créé par la praticien entre la racine et l'intrados de l'élément prothétique, on soumet ce dernier à un effort axial d'arrachement et lorsque les étriers s'écartent, celui qui se trouve en appui sur l'intrados dudit élément prothétique pivote légèrement et reste parallèle à celui qui se trouve en appui sur le sommet de la dent, de sorte que l'effort d'extraction s'exerce toujours rigoureusement axialement pendant toute la trajectoire du mouvement d'arrachement. De la sorte, lors de ce mouvement, le tenon ne se trouve pas soumis à des efforts de flexion susceptibles d'entraîner des fissures ou une fracture de la racine.

En outre, l'utilisation de l'instrument par accès vestibulaire assure une bonne visibilité du site.

L'encombrement réduit de l'extrémité travaillante de l'instrument est équivalent à celui des autres instruments utilisés par le praticien en chirurgie dentaire restauratrice ; de plus, l'instrument n'est utilisé que lors de la phase finale de l'intervention, la préparation du site avec vérification (à l'aide de la jauge décrite ci-après) de la possibilité d'insertion de l'extrémité travaillante de l'instrument, constituant l'essentiel de l'intervention.

Suivant un mode d'exécution avantageux de l'invention, l'instrument comprend des moyens d'assujettissement des branches d'extraction à l'action de forces d'écartement progressives.

Cette disposition évite une ouverture brusque des branches d'extraction entraînant une éjection brutale du tenon ou pivot.

Suivant un autre mode de réalisation intéressant de l'invention, l'instrument comprend un moyen de rappel automatique des branches d'extraction en position de rapprochement. De la sorte, les étriers d'extraction se trouve toujours accolés lors de l'introduction de l'extrémité active de l'instrument entre la racine de la dent support et l'intrados de l'élément prothétique.

Selon une autre disposition caractéristique, l'instrumentation selon l'invention comprend encore au moins une jauge constituée par une barrette aplatie comprenant une partie de préhension ou manche et une partie travaillante dont l'extrémité est formée par une fourchette de calibrage. L'épaisseur de cette fourchette de calibrage correspond à l'épaisseur du couple d'étriers des branches d'extraction lorsque ces derniers se trouvent en position rapprochée. L'utilisation de cette jauge permet de vérifier le diamètre du tenon à extraire et l'existence d'un écartement convenable entre la racine de la dent support et l'intrados de l'élément prothétique, cet espace étant préparé par le praticien, de la manière habituelle, avant l'opération d'extraction de l'élément prothétique proprement dite.

Les buts, caractéristiques et avantages ci-dessus, et d'autres encore, ressortiront mieux de la description qui suit et des dessins annexés dans lesquels:
La figure 1 est une vue de face de l'instrument d'extraction d'éléments prothétiques à tenon radiculaire ou d'implants selon l'invention, représenté dans la position suivant laquelle les deux étriers d'extraction sont accolés.
La figure 2 est une vue de côté de cet instrument.

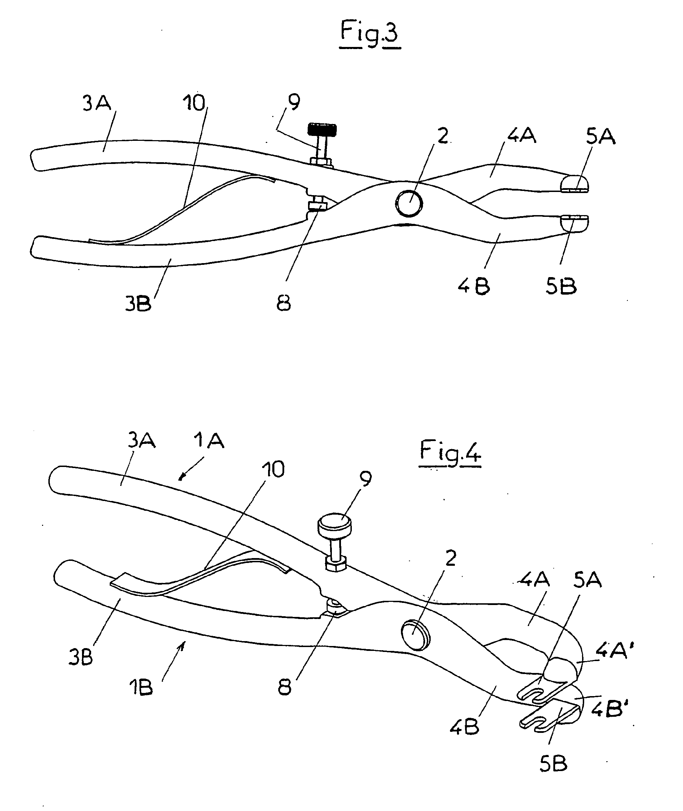

La figure 3 est une vue de face montrant les étriers d'extraction en position d'écartement.
La figure 4 est une vue en perspective de l'instrument représenté dans la position de la figure 3.

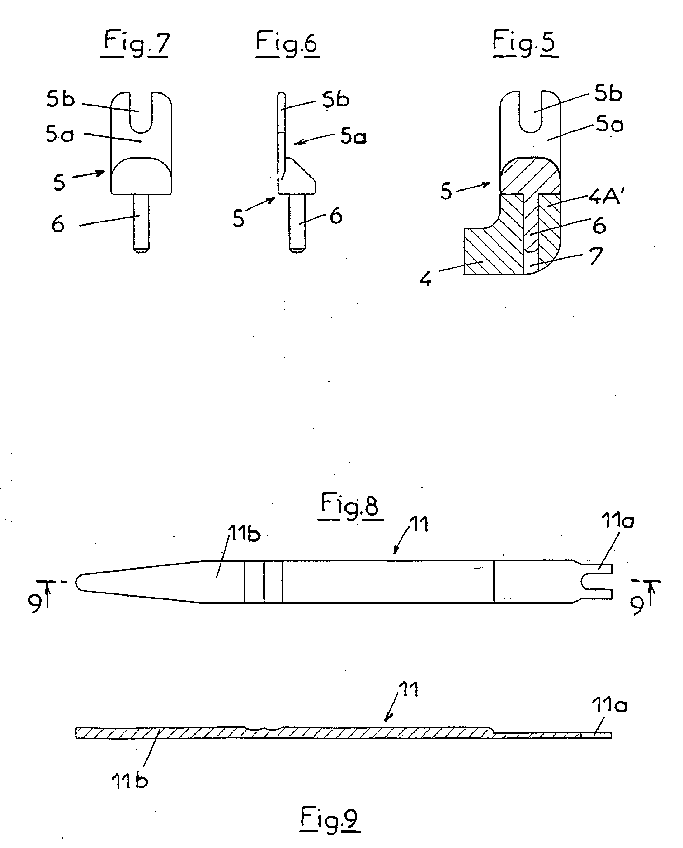

La figure 5 est une vue de détail, en coupe axiale, de l'extrémité travaillante de l'un des leviers pivotants de l'instrument, montrant un exemple de montage amovible et pivotant d'un étrier à l'extrémité de la branche d'extraction dudit levier.
La figure 6 est une vue de côté de l'un des étriers d'extraction amovible de l'instrument.
La figure 7 est une vue de face de cet étrier d'extraction.
La figure 8 est une vue de face de la jauge constituant un élément complémentaire de l'instrument selon l'invention.
La figure 9 est une vue en coupe longitudinale selon la ligne 9-9 de la figure 8.
La figure 10 est une vue en perspective montrant le positionnement du couple d'étriers d'extraction de l'instrument autour de la tige d'un élément prothétique scellé dans une racine dentaire.
La figure 11 est une vue de détail, montrant l'extrémité travaillante de l'instrument, engagée entre le sommet de la racine et l'intrados de l'élément prothétique.
La figure 12 est une vue en perspective analogue à la figure 10 et montrant l'écartement des étriers assurant l'extraction de l'élément prothétique.
La figure 13 est une vue de détail analogue à la figure 11, montrant l'extraction de l'élément prothétique.
La figure 14 est une vue de face d'un autre mode d'exécution avantageux des étriers d'extraction interchangeables.
La figure 15 est une vue de côté de cet étrier d'extraction.
La figure 16 est une vue en plan de la figure 14.

On se reporte auxdits dessins pour décrire des exemples de réalisation avantageux, quoique nullement limitatifs, de l'instrumentation selon l'invention.

Cette instrumentation comprend un instrument d'extraction d'éléments prothétiques à tenon radiculaire ou d'implants, comportant deux leviers identiques ou sensiblement identiques 1A, 1 B, reliés, de manière non croisée, au moyen d'un axe d'articulation 2. Chacun de ces leviers est agencé pour constituer une poignée 3A, 3B et une branche d'extraction 4A, 4B, s'étendant de part et d'autre de l'axe d'articulation 2. On comprend que le rapprochement des deux poignées 3A, 3B entraîne l'écartement des deux branches d'extraction 4A, 4B.

Les poignées 3A, 3B ont une longueur plus importante que celle des branches d'extraction 4A, 4B.

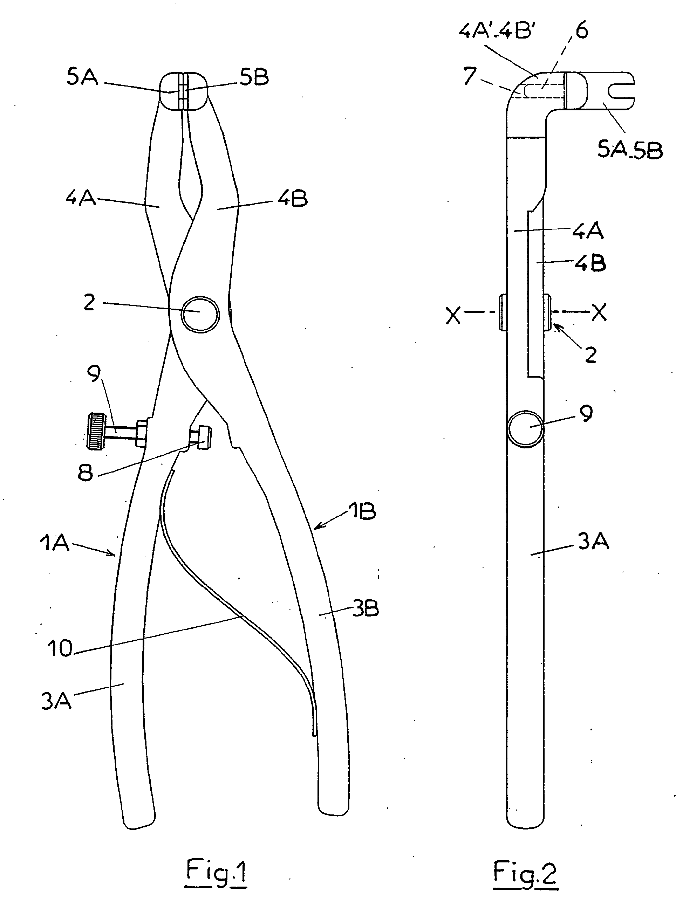

Les branches d'extraction 4A, 4B sont recourbées, leurs extrémités 4A', 4B', formant un angle avec la partie restante desdites branches, comme le montre notamment la figure 2. Grâce à cet agencement, les extrémités travaillantes de l'instrument restent parallèles entre elles lors de leur écartement.

Chaque extrémité coudée 4A', 4B' des branches 4A, 4B est agencée pour permettre le montage amovible et pivotant d'un embout d'extraction 5A, 5B en forme de fourchette ou d'étrier, cet embout étant lui-même agencé de manière complémentaire pour pouvoir être fixé dans le prolongement de ladite extrémité, dans les conditions susmentionnées. Les étriers 5 présentent une surface d'appui plane 5a orientée vers l'extérieur et délimitant une échancrure 5b.

Selon l'exemple illustré, les embouts ou étriers 5A, 5B comportent un prolongement constitué par une tige ou queue cylindrique 6, tandis que l'extrémité coudée 4A', 4B' des branches d'extraction 4A, 4B est munie d'un alésage traversant 7. Les diamètres de la tige de montage 6 et de l'alésage 7 sont prévus pour autoriser l'insertion sans jeu excessif de ladite tige dans ledit alésage, de sorte que l'étrier puisse être fixé sans possibilité de détachement intempestif tout en pouvant pivoter.

Grâce à ce montage, lorsqu'on procède à l'extraction d'un élément prothétique T, chaque étrier d'extraction 5A, 5B reste en permanence en contact parfait avec sa surface d'appui, du début à la fin de l'action d'écartement des branches 4A, 4B. Plus précisément, l'un des étriers reste en contact maximum avec la racine dentaire, tandis que l'autre étrier reste en contact maximum avec l'intrados de l'élément prothétique T. Lors de son extraction, le tenon de l'élément prothétique T n'est soumis à aucun effort de torsion.

De préférence, l'instrumentation selon l'invention comprend une pluralité d'étriers d'extraction 5 assortis deux à deux, les échancrures 5b de ces paires d'étriers correspondant à différents diamètres de tenons d'éléments prothétiques, ces couples d'étriers interchangeables pouvant également présenter des épaisseurs différentes. De la sorte, le praticien peut choisir un couple d'étriers adaptés au diamètre du tenon de l'élément prothétique à extraire et/ou à la dimension de l'espace créé entre la racine et l'intrados dudit élément.

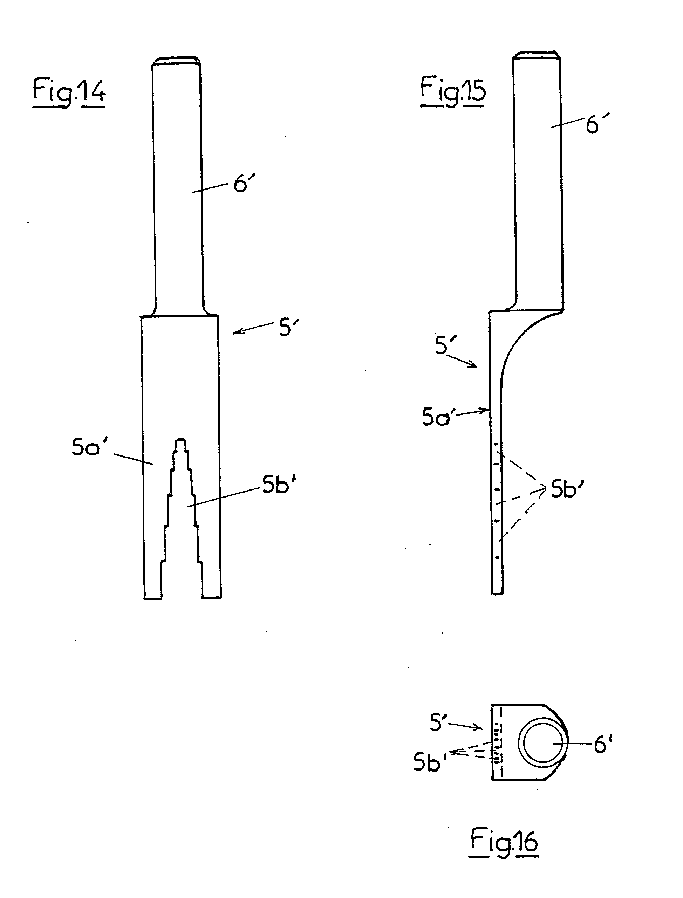

On a représenté, aux figures 14 à 16, un autre mode d'exécution très intéressant des embouts d'extraction, suivant lequel l'échancrure 5b' de la partie travaillante 5a' desdits embouts d'extraction 5' présente une largeur décroissante en direction du fond de ladite échancrure. Cette échancrure peut avoir la forme d'un V ou présenter un écartement décroissant par degrés.

Ces embouts d'extraction sont destinés à permettre et à faciliter la dépose de tenons radiculaires simples. Leur objectif est de pouvoir s'adapter à la dimension d'une petite encoche que le praticien aura préalablement réalisée, de part et d'autre du tenon à extraire. Ils s'adaptent aussi au diamètre des tenons des éléments prothétiques. Ils comportent également une queue cylindrique 6' permettant leur fixation amovible à l'extrémité des branches d'extraction de l'instrument d'extraction.

Suivant un mode de réalisation avantageux, l'instrument selon l'invention comporte des moyens d'assujettissement des branches d'extraction à l'action de forces d'écartement progressives.

Ces moyens peuvent être constitués par un dispositif apte à contrarier le libre rapprochement des poignées 3A, 3B de l'instrument. Selon l'exemple illustré, ce dispositif est constitué par une butée souple et compressible 8, par exemple exécutée en "Téflon" (marque déposée) et fixée sur l'une des poignées (poignée 3A) et disposée en regard d'une surface interne de l'autre poignée (poignée 3B), de façon telle que lors du rapprochement desdites poignées, cette butée élastique se trouve comprimée entre ces dernières. La butée élastique 8 est fixée à l'extrémité d'une vis 9 se vissant dans la poignée 3A, de façon à autoriser un réglage de la position d'appui de ladite butée. Alternativement, cette butée élastique pourrait être fixée directement sur l'une des poignées de l'instrument, en regard d'un organe d'appui réglable ou non, fixé sur l'autre poignée.

Avant d'effectuer le rapprochement des poignées 3A, 3B, la position de la butée souple 8 est réglée, si nécessaire, de sorte que ladite butée vienne en appui contre la poignée 3B. Lors du rapprochement des poignées 3A, 3B, l'écrasement de la butée souple 8 oppose une résistance progressive à ce rapprochement dont la poursuite nécessite une action de serrage plus forte sur lesdites poignées. On obtient, de la sorte, une progressivité de l'écartement des étriers d'extraction 5A, 5B évitant l'éjection brutale de l'élément prothétique T descellé.

Selon un autre mode d'exécution intéressant, l'instrument est encore muni d'un moyen de rappel automatique des branches d'extraction 4A, 4B, en position de rapprochement. Ce moyen peut être constitué par un ressort à lame 10 interposé entre les poignées 3A, 3B de l'instrument et tendant à écarter lesdites poignées et, par conséquent, à rapprocher les branches d'extraction 4A, 4B. De la sorte, les étriers d'extraction 5A, 5B se trouvent automatiquement en position d'accolement c'est-à-dire dans la position souhaitable pour entreprendre l'action d'extraction après création, par le praticien, de l'espace nécessaire, entre la racine de la dent support et l'intrados de l'élément prothétique, pour l'engagement desdits étriers d'extraction accolés.

Pour contrôler la dimension adéquate de l'espace aménagé par le praticien, l'instrumentation selon l'invention comprend encore, de préférence, au moins une jauge 11 constituée par une barrette aplatie, droite ou courbe, comprenant une partie de préhension 11 b et une partie travaillante dont l'extrémité est formée par une fourchette de calibrage 11a. L'épaisseur de cette fourchette de calibrage 11 a correspond à l'épaisseur d'un couple d'étriers 5A, 5B positionnés aux extrémités des branches d'extraction 4A, 4B, respectivement, lorsque ces derniers sont accolés.

De manière avantageuse, l'instrumentation comprend un jeu de plusieurs jauges 11 dont les fourchettes de calibrage 11 a correspondent à différents diamètres de tenons d'éléments prothétiques T et à différentes tailles d'étriers d'extraction 5. De la sorte, après avoir vérifié la dimension de l'espace créé entre la racine R et l'intrados de l'élément prothétique et le calibre du tenon dudit élément, le praticien peut adapter le couple d'étriers correspondant à ces mesures, sur les branches d'extraction de l'instrument.

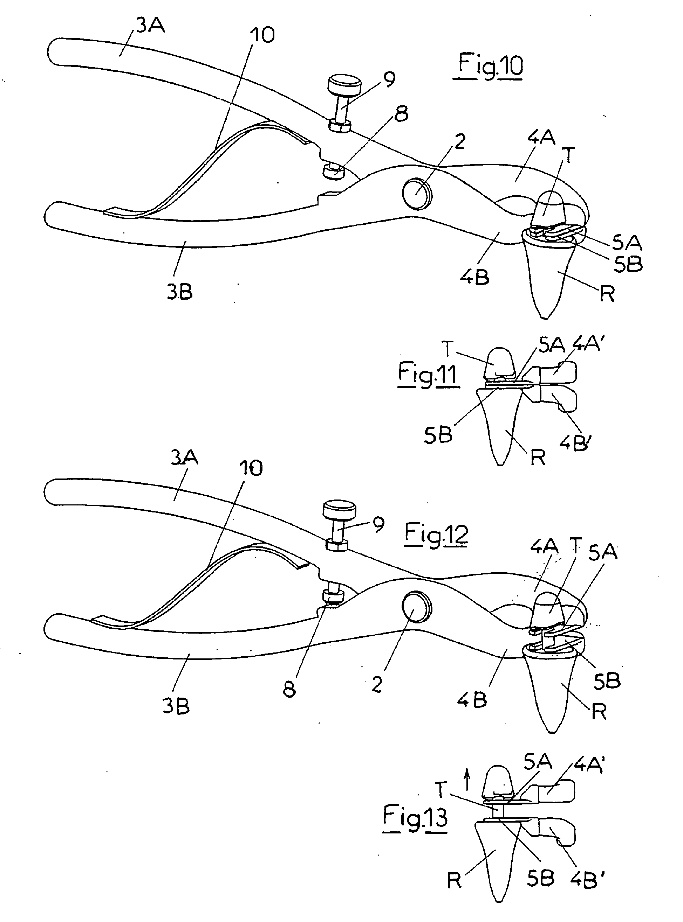

Les figures 10 et 11 illustrent l'extraction d'un élément prothétique à tenon radiculaire T scellé dans une racine dentaire R.

Sur les figures 10 et 11, on voit que les étriers accolés 5A-5B de l'instrument ont été engagés dans l'espace E préparé par le praticien, à l'aide des techniques et matériels habituels, et "encerclent" le tenon de l'élément prothétique T, les poignées 3A, 3B étant écartées.

Sur les figures 12 et 13, les poignées ont été rapprochées en provoquant l'écartement des branches 4A, 4B et des étriers d'extraction 5A, 5B, cet écartement communiquant un mouvement axial d'extraction à l'élément prothétique T assurant l'extirpation de ce dernier.

## Revendications

1. Instrumentation pour l'extraction d'éléments prothétiques à tenon radiculaire ou d'implants, constituée par un instrument comportant deux leviers (1A, 1B) reliés l'un à l'autre, de façon pivotante et non croisée, au moyen d'une articulation (2), chacun desdits leviers comprenant ainsi une poignée (3A, 3B) et une branche d'extraction (4A, 4B) s'étendant de part et d'autre de ladite articulation (2) de sorte que le rapprochement des deux poignées (3A, 3B) entraîne l'écartement des deux branches d'extraction (4A, 4B), **caractérisée en ce que** les extrémités (4A', 4B') des branches d'extraction (4A, 4B) de cet instrument sont recourbées de sorte à former un angle avec la partie restante desdites branches, et **en ce qu'**il comporte des embouts d'extraction (5A, 5B) en forme d'étriers ou fourchettes et agencés pour pouvoir être positionnés de manière amovible et avec une aptitude de pivotement, aux extrémités recourbées (4A', 4B') des branches d'extraction (4A, 4B).

2. Instrumentation selon la revendication 1, **caractérisée en ce qu'**elle comprend plusieurs paires d'étriers d'extraction (5) de différentes épaisseurs et dont les échancrures (5b) correspondent à différents diamètres de tenons d'éléments prothétiques (T).

3. Instrumentation selon la revendication 1, **caractérisée en ce que** l'instrument comprend des moyens (8, 9) d'assujettissement des branches d'extraction (4A, 4B) à l'action de forces d'écartement progressives.

4. Instrumentation suivant l'une des revendications 1 ou 2, **caractérisée en ce** l'instrument comprend un moyen de rappel automatique des branches d'extraction en position de rapprochement.

5. Instrumentation selon la revendication 1, **caractérisée en ce qu'**elle comprend au moins une jauge (11) constituée par une barrette aplatie droite ou courbe, comprenant une partie de préhension ou manche (11 b) et une partie travaillante dont l'extrémité est formée par une fourchette de calibrage (11a), l'épaisseur de cette fourchette de calibrage correspondant à celle du couple d'étriers (5A, 5B) des branches d'extraction (4A, 4B) lorsque ces derniers se trouvent en position rapprochée ; de préférence, ladite instrumentation comprend plusieurs jauges (11) dont les fourchettes de calibrage (11 a) correspondent à différents diamètres de tenons d'éléments prothétiques (T) et à différentes tailles d'étriers d'extraction (5).

6. Instrumentation suivant l'une des revendications 1 ou 2, **caractérisée en ce que** les étriers (5) présentent une surface d'appui plane (5a) orientée vers l'extérieur et délimitant une échancrure (5b).

7. Instrumentation selon la revendication 6, **caractérisée en ce que** l'échancrure (5b') des étriers d'extraction (5') présente une largeur décroissante en direction du fond de ladite échancrure, cette dernière pouvant avoir la forme d'un V ou présenter un écartement décroissant par degrés.

8. Instrumentation selon l'une quelconque des revendications 1, 2, 6 ou 7, **caractérisée en ce que** les étriers d'extraction (5A, 5B) comportent une tige ou queue cylindrique (6) et **en ce que** les extrémités coudées (4A', 4B') des branches d'extraction (4A, 4B) sont munies d'un alésage traversant (7) permettant le montage amovible et pivotant desdits étriers dans le prolongement desdites extrémités.

9. Instrumentation suivant la revendication 3, **caractérisée en ce que** les moyens d'assujettissement des branches d'extraction (4A, 4B) à l'action de forces d'écartement progressives, sont constitués par une butée souple et compressible (8) fixée sur l'une (3A) des poignées, en regard d'une surface interne de l'autre poignée (3B), de façon telle que lors du rapprochement desdites poignées, cette butée élastique se trouve comprimée entre ces dernières.

10. Instrumentation selon la revendication 9, **caractérisée en ce qu'**il comporte un moyen de réglage (9) de l'appui de ladite butée élastique (8).

11. Instrumentation suivant la revendication 4, **caractérisée en ce que** le moyen de rappel automatique des branches d'extraction (4A, 4B) en position de rapprochement est constitué par un ressort à lame (10) interposé entre les poignées (3A, 3B) dudit instrument et tendant à écarter ces dernières.

## Claims

1. Instrumentation for extracting prosthetic elements having a root post or implants, constituted by an instrument comprising two levers (1A, 1B) connected to each other, in a rotating and non-crossing manner, by an articulation (2), each of said levers being thus comprised of a handle (3A, 3B) and an extracting arm (4A, 4B) extending on either side of the articulation (2) so that bringing together the two handles (3A, 3B) causes the two extracting arms (4A, 4B) to separate, **characterized in that** the ends (4A', 4B') of the extracting arms (4A, 4B) of said instrument are curved so as to form an angle with the remaining part of the extracting arms, and **in that** it includes extracting tips (5A, 5B) in the form of clamps or forks, arranged for being positionable in a detachable way and with a rotational capacity, at curved ends (4A', 4B') of the extracting arms (4A, 4B).

2. Instrumentation according to claim 1, **characterized in that** it comprises a plurality of pairs of extracting clamps (5) having different thicknesses and having notches (5b) corresponding to different diameters of prosthetic element posts (T).

3. Instrumentation according to claim 1, **characterized in that** the instrument comprises means (8, 9) for subjecting the extracting arms (4A, 4B) to action of progressive separating forces.

4. Instrumentation according to one of claims 1 or 2, **characterized in that** the instrument comprises means for automatic return of the extracting arms into a rapprochement position.

5. Instrumentation according to claim 1, **characterized in that** it comprises at least one gauge (11) constituted by a flat bracket straight or curved comprising a grasping part or sleeve (11b) and a working part the end of which is formed by a calibrating fork (11a), the thickness of said calibrating fork corresponding to thickness of the pair of clamps (5A, 5B) of the extracting arms (4A, 4B) when the arms are in a position close together; preferably, said instrumentation comprises several gauges (11) the calibrating forks (11 a) of which correspond to different diameters of prosthetic element posts (T) and different sizes of extracting clamps (5).

6. Instrumentation according to one of claims 1 or 2, **characterized in that** said clamps (5) have a planar support surface (5 a) oriented to an outside and defining a notch (5b).

7. Instrumentation according to claim 6, **characterized in that** said notch (5b') of the extracting clamps (5') has a decreasing width in the direction to the bottom of said notch, this latter being in a shape of a V or having a spacing that decreases by degrees.

8. Instrumentation according to claims 1, 2, 6 or 7, **characterized in that** the extracting clamps (5A, 5B) comprise a shaft or cylindrical rod (6), and **in that** the bent ends (4A', 4B') of the extracting arms (4A, 4B) include a traversing bore (7) permitting the detachable and rotatable mounting of the clamps in the extension of the ends.

9. Instrumentation according to claim 3, **characterized in that** the means for subjecting the extracting arms (4A, 4B) to the progressive forces moving them apart are constituted by a flexible and compressible stop (8) fixed to one (3A) of the handles, facing an internal surface of the other handle (3B) such that when the handles are brought together, said elastic stop is compressed therebetween.

10. Instrumentation according to claim 9, **characterized in that** it comprises means (9) for regulating support of the elastic stop (8).

11. Instrumentation according to claim 4, **characterized in that** said means for automatic return of the extracting arms (4A, 4B) to a rapprochement position is constituted by a leaf spring (10) interposed between the handles (3A, 3B) of said instrument and tending to separate said handles.

## Patentansprüche

1. Instrumentelle Ausrüstung zum Extrahieren von Prothesenelementen mit Radixzapfen oder Implantaten, die aus einem Instrument besteht, das zwei Hebel (1A, 1B) aufweist, die miteinander schwenkend und ungekreuzt mittels eines Gelenks (2) verbunden sind, wobei die Hebel einen Griff (3A, 3B) und einen Extraktionsschenkel (4A, 4B) aufweisen, der sich zu beiden Seiten des Gelenks (2) derart erstreckt, dass das Annähern der zwei Griffe (3A, 3B) das Spreizen der zwei Extraktionsschenkel (4A, 4B) nach sich zieht, **dadurch gekennzeichnet, dass** die Enden (4A', 4B') der Extraktionsschenkel (4A, 4B) dieses Instruments derart zurückgebogen sind, dass sie mit dem restlichen Teil der Schenkel einen Winkel bilden, und dass es Extraktionsansätze (5A, 5B) in Form von Bügeln oder Gabeln aufweist, die eingerichtet sind, um abnehmbar und mit einer Eignung zum Schwenken an den zurückgebogenen Enden (4A', 4B') der Extraktionsschenkel (4A, 4B) positioniert werden zu können.

2. Instrumentelle Ausrüstung nach Anspruch 1, **dadurch gekennzeichnet, dass** sie mehrere Paare Extraktionsschenkel (5) mit unterschiedlichen Stärken aufweist, und deren Ausschnitte (5b) unterschiedlichen Durchmessern von Zapfen von Prothesenelementen (T) entsprechen.

3. Instrumentelle Ausrüstung nach Anspruch 1, **dadurch gekennzeichnet, dass** das Instrument Mittel (8, 9) aufweist, um die Extraktionsschenkel (4A, 4B) der Wirkung allmählicher Spreizkräfte zu unterwerfen.

4. Instrumentelle Ausrüstung nach einem der Ansprüche 1 oder 2, **dadurch gekennzeichnet, dass** das Instrument ein automatisches Rückholmittel der Extraktionsschenkel in die Annäherungsposition aufweist.

5. Instrumentelle Ausrüstung nach Anspruch 1, **dadurch gekennzeichnet, dass** sie mindestens ein Eichmaß (11) aufweist, das aus einer abgeflachten geraden oder gebogenen Leiste besteht, die einen Greifteil oder Stiel (11b) und einen arbeitenden Teil aufweist, dessen Ende aus einer Kalibriergabel (11a) ausgebildet ist, wobei die Stärke dieser Kalibriergabel der des Paares Bügel (5A, 5B) der Extraktionsschenkel (4A, 4B) entspricht, wenn sich diese Letzteren in angenäherter Position befinden; wobei die instrumentelle Ausrüstung vorzugsweise mehrere Eichmaße (11) aufweist, deren Kalibriergabeln (11a) unterschiedlichen Durchmessern von Zapfen von Prothesenelementen (T) und unterschiedlichen Größen von Extraktionsbügeln (5) entsprechen.

6. Instrumentelle Ausrüstung nach einem der Ansprüche 1 oder 2, **dadurch gekennzeichnet, dass** die Bügel (5) eine ebene Auflagefläche (5a) aufweisen, die zur Außenseite ausgerichtet ist und einen Ausschnitt (5b) abgrenzt.

7. Instrumentelle Ausrüstung nach Anspruch 6, **dadurch gekennzeichnet, dass** der Ausschnitt (5b') der Extraktionsbügel eine Breite aufweist, die in die Richtung des Bodens des Ausschnitts abnimmt, wobei Letzterer die Form eines V haben kann oder ein Spreizen aufweisen kann, das in Graden abnimmt.

8. Instrumentelle Ausrüstung nach einem der Ansprüche 1, 2, 6 oder 7, **dadurch gekennzeichnet, dass** die Extraktionsbügel (5A, 5B) einen zylindrischen Schaft oder Stiel (6) aufweisen, und dass die abgebogenen Enden (4A', 4B') der Extraktionsschenkel (4A, 4B) mit einer durchgehenden Bohrung (7) versehen sind, die die abnehmbare und schwenkende Montage der Bügel in der Verlängerung der Enden erlaubt.

9. Instrumentelle Ausrüstung nach Anspruch 3, **dadurch gekennzeichnet, dass** die Mittel, um die Extraktionsschenkel (4A, 4B) der Wirkung allmählicher Spreizkräfte zu unterwerfen, aus einem biegsamen und komprimierbaren Anschlag (8) bestehen, der auf einem (3A) der Griffe gegenüber einer Innenfläche des anderen Griffs (3B) derart befestigt ist, dass dieser elastische Anschlag beim Annähern der Griffe zwischen diesen Letzteren komprimiert wird.

10. Instrumentelle Ausrüstung nach Anspruch 9, **dadurch gekennzeichnet, dass** sie ein Mittel zum Einstellen (9) der Auflage des elastischen Anschlags (8) aufweist.

11. Instrumentelle Ausrüstung nach Anspruch 4, **dadurch gekennzeichnet, dass** das automatische Rückholmittel der Extraktionsschenkel (4A, 4B) in Annäherungsposition aus einer Blattfeder (10) besteht, die zwischen den Griffen (3A, 3B) des Instruments liegt und dazu tendiert, diese Letzteren voneinander abzuspreizen.
